# EUROPÄISCHE PATENTSCHRIFT

(11) **EP 1 159 169 B1**
(45) Veröffentlichungstag und Bekanntmachung des Hinweises auf die Patenterteilung: **25.07.2007**
(21) Anmeldenummer: 00901536.3
(22) Anmeldetag: 13.01.2000
(51) Int. Cl.: B60S 1/08, G06K 9/20

(54) **OPTOELEKTRONISCHE ÜBERWACHUNGSEINRICHTUNG FÜR EIN KRAFTFAHRZEUG**
OPTOELECTRONIC MONITORING DEVICE FOR A MOTOR VEHICLE
DISPOSITIF DE SURVEILLANCE OPTOELECTRONIQUE POUR UN VEHICULE A MOTEUR

(30) Priorität: 06.03.1999 DE 19909986
(43) Veröffentlichungstag der Anmeldung: 05.12.2001
(73) Patentinhaber: Leopold Kostal GmbH & Co. KG, 58769 Lüdenscheid (DE)
(72) Erfinder: MINDL, Anton, D-58515 Lüdenscheid (DE); BLÄSING, Frank, D-59457 Werl (DE); WEBER, Thomas, D-58509 Lüdenscheid (DE)
(86) Internationale Anmeldenummer: PCT/EP2000/000182
(87) Internationale Veröffentlichungsnummer: WO 2000/053466

(56) Entgegenhaltungen:
- EP-A- 0 551 984
- EP-A- 0 708 325
- EP-A- 0 832 798
- US-A- 4 383 170

## Beschreibung

Die Erfindung bezieht sich auf eine optoelektronische Überwachungseinrichtung für ein Kraftfahrzeug.

Eine solche Überwachungseinrichtung ist beispielsweise aus der EP 0 832 798 A2 bekannt. Diese Überwachungseinrichtung ist als Regensensor eingesetzt und besteht aus einem Abbildungssystem zum Abbilden von auf der Windschutzscheibe eines Kraftfahrzeuges befindlichen Wassertropfen auf einem Kamerasensor, dessen Objektiv vom Innenraum des Kraftfahrzeuges zur Windschutzscheibe hin gerichtet und auf den erfaßten Windschutzscheibenausschnitt fokussiert ist. Der Kamerasensor ist im Bereich des Innenraumrückspiegels in Fahrtrichtung nach vorne blickend angeordnet. Eine Auswertung der erfaßten Bilddaten erfolgt in einer Prozessoreinheit, die ebenfalls zum Ansteuern eines Wischermotors in Abhängigkeit von den erfaßten Bilddaten vorgesehen ist.

Mit dem Abbildungssystem und dem Kamerasensor ist ausschließlich eine Wassertropfendetektion auf der Windschutzscheibe eines Kraftfahrzeuges möglich. Im Automotivbereich werden optische Sensoren auch zum Erfassen weiterer optischer Informationen verwendet. Beispielsweise finden derartige Sensorsysteme Anwendung bei der Erfassung des Sonnenstandes, bei der Fahrlichtsteuerung oder etwa bei einer Innenraumüberwachung. Sämtliche dieser Systeme verfügen über entsprechende photoelektrische Sensorarrays sowie über entsprechende Abbildungssysteme.

Ausgehend von diesem diskutiertem Stand der Technik liegt der Erfindung daher die Aufgabe zugrunde, eine optoelektronische Überwachungseinrichtung vorzuschlagen, mit der unterschiedliche optische Informationen verschiedener optischer Sensorsysteme erfaßbar sind.

Diese Aufgabe wird erfindungsgemäß durch eine optoelektronische Überwachungseinrichtung für ein Kraftfahrzeug gelöst, umfassend
- mehrere, unterschiedlichen Überwachungsobjekten zugeordnete optische Abbildungssysteme, die ausgangsseitig die photosensitive Oberfläche eines gemeinsamen photoelektrischen Sensorarrays, bestehend aus einer Vielzahl von einzelne Bildpunkte bildenden photoelektrischen Wandlerelementen, beaufschlagen, welche Wandlerelemente in Abhängigkeit von ihrer jeweiligen Lichtbeaufschlagung ein der Lichtstärke entsprechendes elektrisches Signal generieren, wobei der Ausgang eines jeden Abbildungssystems zum Abbilden der von diesem Abbildungssystem bereitgestellten optischen Information auf einem Bereich der photosensitiven Oberfläche des Sensorarrays angeordnet ist, der sich zumindest teilweise mit den Belichtungsbereichen der anderen Abbildungssysteme überschneidet,
- eine in dem Strahlengang eines jeden Abbildungssystems angeordnete, unter Ausnutzung eines elektrooptischen Effekts elektrisch ansteuerbare Verschlußeinheit zum Steuern einer Belichtung der photosensitiven Oberfläche des Sensorarrays durch dieses Abbildungssystem und
- einen durch die elektrischen Ausgangssignale des Sensorarrays beaufschlagten Controller zum Ansteuern der Verschlußeinheit, zum Auswerten der optischen Informationen und zum Ansteuern von Aktoren in Abhängigkeit von dem Ergebnis einer Auswertung der Objekt bezogenen Informationen.

Durch die erfindungsgemäße Überwachungseinrichtung, dem mehrere Abbildungssysteme zugeordnet sind, zweckmäßigerweise von einem gemeinsamen, die Abbildungssysteme zusammenfassenden Halter getragen, kann diese Überwachungseinrichtung unter Verwendung eines einzigen Sensorarrays für die unterschiedlichsten optischen Sensorsysteme eingesetzt werden. Als Abbildungssysteme kommen sowohl bildabbildende, etwa Linsen, oder lichtleitende Systeme in Frage. Dem Ausgang jedes Abbildungssystems kann eine bestimmte Wandlerelementgruppe des Sensorarrays zugeordnet sein, so daß eine eindeutige Zuordnung bestimmter Gruppensignale zu bestimmten Abbildungssystemen und somit zu bestimmten zu erfassenden optischen Informationen möglich ist. Die einem Abbildungssystem zugeordnete Wandlerelementgruppe des Sensorarrays überschneidet sich zumindest teilweise mit derjenigen eines weiteren Abbildungssystems. Dabei ist zweckmäßigerweise vorgesehen, daß die Größe des Sensorarrays durch die größte von einem Abbildungssystem benötigte Abbildungsgröße bestimmt wird und daß alle weiteren Abbildungssysteme ebenfalls in diesem Bereich die photosensitive Oberfläche des Sensorarrays belichten. Dies hat zur Folge, daß die Größe des Sensorarrays, wobei bevorzugt ein Kamerasensorchip eingesetzt ist, trotz der zahlreichen, darauf abgebildeten optischen Informationen entsprechend klein ausgebildet sein kann. Zum Takten der Belichtung des Sensorarrays durch die einzelnen Abbildungssysteme ist in den Strahlengang eines jeden Abbildungssystems eine elektrisch ansteuerbare Verschlußeinheit eingebracht. Die Verschlußeinheit arbeitet unter Ausnutzung eines elektrooptischen Effektes und kann somit beispielsweise als Flüssigkristallblende oder nach einem elektrochromen Prinzip arbeitend ausgebildet sein. Die zeitlich getaktete Abbildung optischer Informationen der unterschiedlichen Abbildungssysteme auf dem Sensorarray kann als Codierung zur Identifizierung der optischen Information eines bestimmten Abbildungssystemes eingesetzt werden. Im Unterschied zu einer Codierung durch eine einem bestimmten Abbildungssystem zugeordnete Wandlerelementgruppe ist eine Zuordnung der empfangenen optischen Informationen zu einem Abbildungssystem unabhängig von dem tatsächlichen von dem Abbildungssystem belichteten Bereich des Sensorarrays möglich.

Die einzelnen Abbildungssysteme sind im Bereich des photoelektrischen Sensorarrays zweckmäßigerweise zu einer gegenständlichen Einheit zusammengefaßt und auf dem Schaltungsträger des Sensorarrays fixiert, so daß das Sensorarray bezüglich der Ausgänge der Abbildungssysteme in einer fixierten Position zu diesem gehalten ist.

Bei Bestückung eines in einem Kraftfahrzeug verwendeten photoelektrischen Sensorarrays mit einer Linse als eines der Abbildungssysteme ist dieses zum Erfassen bildabbildender Informationen geeignet. Ein solches System läßt sich daher beispielsweise als Innenraumüberwachungssystem oder auch zur Überwachung der Umgebung des Kraftfahrzeuges, etwa zum Signalempfang bei einer Abstands- oder Regensensorik verwenden. Durch die zeitlich getaktete Abbildung der optischen Information der einzelnen Abbildungssysteme, können auch solche Informationen über das Sensorarray ausgewertet werden, die nicht kontinuierlich, sondern nur bei Bedarf bereitgestellt werden müssen. Beispielsweise kann ein bildabbildendes Abbildungssystem als Einklemmschutz zum Verhindern eines Einklemmens von Gegenständen etwa beim Schließen eines elektrisch betätigbaren Schiebedaches eingesetzt sein. Diese Überwachungseinrichtung befindet sich nur dann in ihrer Überwachungsfunktion, wenn tatsächlich das Schiebedach geschlossen wird. Nur in diesem zum Schließen des Schiebedaches notwendigen Zeitintervall wird die photosensitive Oberfläche des Sensorarrays mit dieser optischen Information belichtet. Die Steuerung der einzelnen Verschlußeinheitung und die Auswertung der empfangenen optischen Informationen erfolgt in einem Controller.

Bei Verwendung dieses Sensorarrays zur Innenraumüberwachung ist es zweckmäßig, ein solches Sensorarray im Bereich des inneren Rückspiegels bzw. im Bereich einer Dachkonsole, etwa als Dachmodul nach hinten blickend anzuordnen. Weitere optische Informationen können dem Sensorarray über optische Lichtleiter als weitere Abbildungssysteme zugeführt werden, wobei einzelne Fasern zur Übermittlung etwa von Lichtstärken oder Faserbündel zur Übermittlung von bildabbildenden Informationen eingesetzt sein können.

Ein solches photoelektrisches Sensorarray mit einer durch Zusammenfassen verschiedener Abbildungssysteme gebildeten Multifunktionsoptik kann auch an anderer Position in einem Kraftfahrzeug angeordnet sein. Die dem Sensorarray zugeführte optische Information kann bereits hinsichtlich der tatsächlich zu erfassenden Information gefiltert sein. Da das Sensorarray zur Aufnahme einer großen Frequenzbandbreite ausgestaltet sein kann, ist ein solches Sensorarray gleichzeitig für die unterschiedlichsten optischen Sensoriken geeignet.

Weitere Ausgestaltungen und Vorteile der Erfindung sind Bestandteil der übrigen Unteransprüche sowie der nachfolgenden Beschreibung unter Bezugnahme auf die beigefügten Figuren. Es zeigen:
- **Fig. 1:**: eine schematisierte Darstellung einer optoelektronischen Überwachungseinrichtung für ein Kraftfahrzeug nach Art eines Blockschaltbildes,
- **Fig. 2.:**: die Überwachungseinrichtung der Figur 1 bei einem Empfang optischer Informationen eines der eingesetzten Abbildungssysteme,
- **Fig. 3:**: eine schematisierte Draufsicht auf eine weitere optoelektronische Überwachungseinrichtung und
- **Fig. 4:**: eine als Regensensor eingesetzte optoelektronische Überwachungseinrichtung für ein Kraftfahrzeug.

Eine optoelektronische Überwachungseinrichtung 1 umfaßt einen Kamerasensor 2, auf dessen photosensitiver Oberfläche 3 mehrere Abbildungssysteme AS₁ - AS₃ die durch diese Abbildungssysteme AS₁ - AS₃ bereitgestellte optische Information abbilden. Das Abbildungssystem AS₁ ist als Objektiv 4 mit einer konvexen Linse ausgebildet. Die Abbildungssysteme AS₂ und AS₃ sind ebenfalls bildabbildende Systeme, bei denen die Bildinformation über Faserbündel 5 bzw. 6 an den Kamerasensor 2 herangeführt werden. Die kamerasensorseitigen stirnseitigen Enden der Faserbündel 5, 6 sind zur besseren Abbildung der bereitgestellten Bildinformation konvex gekrümmt. Dem einkoppelseitigen Ende der Faserbündel 5, 6 ist ebenfalls eine Linse zugeordnet.

Die Abbildungssysteme AS₁ und AS₃ belichten denselben Bereich der photosensitiven Oberfläche 3 des Kamerasensors 2. Das Abbildungssystem AS₂ belichtet lediglich einen Teil des von den Abbildungssystemen AS₁ und AS₃ belichteten Sensorbereiches.

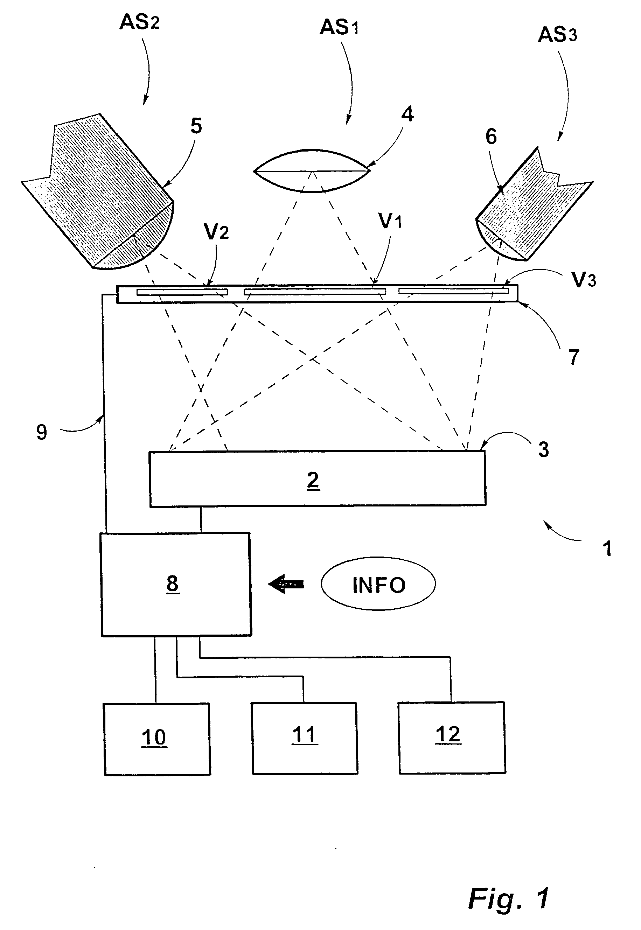

In den Strahlengang der Abbildungssysteme AS₁ - AS₃ ist eine Verschlußeinheit 7 eingeschaltet, die in eine der Anzahl der Abbildungssysteme AS₁ - AS₃ entsprechende Anzahl an Verschlußfeldern V₁ - V₃ segmentiert ist. Die Verschlußeinheit 7 ist als Flüssigkristallblende ausgebildet, deren Verschlußfelder V₁ - V₃ einzeln und unabhängig voneinander elektrisch in ihre lichtdurchlassende bzw. lichtsperrende Stellung geschaltet werden können.
Das zeittaktabhängige Steuern der Verschlußfelder V₁ - V₃ der Verschlußeinheit 7 erfolgt durch einen Mikroprozessor 8, der über eine Steuerleitung 9 mit der Verschlußeinheit 7 verbunden ist. An den Mikroprozessor 8 sind ferner die Ausgänge des Kamerasensors 2 angeschlossen. In Abhängigkeit von der empfangenen optischen Information dient der Mikroprozessor 8 ferner zur Ansteuerung unterschiedlicher Aktoren 10, 11, 12. Zusätzlich kann der Mikroprozessor 8 mit weiteren zur Auswertung der optischen Information notwendigen Parametern beaufschlagt sein. Auch zusätzliche Informationen zur Steuerung der Verschlußeinheit 7 können den Mikroprozessor 8 beaufschlagen. Diese zusätzlichen, den Mikroprozessor 8 beaufschlagenden Informationen sind in Figur 1 durch den Begriff "INFO" gekennzeichnet.

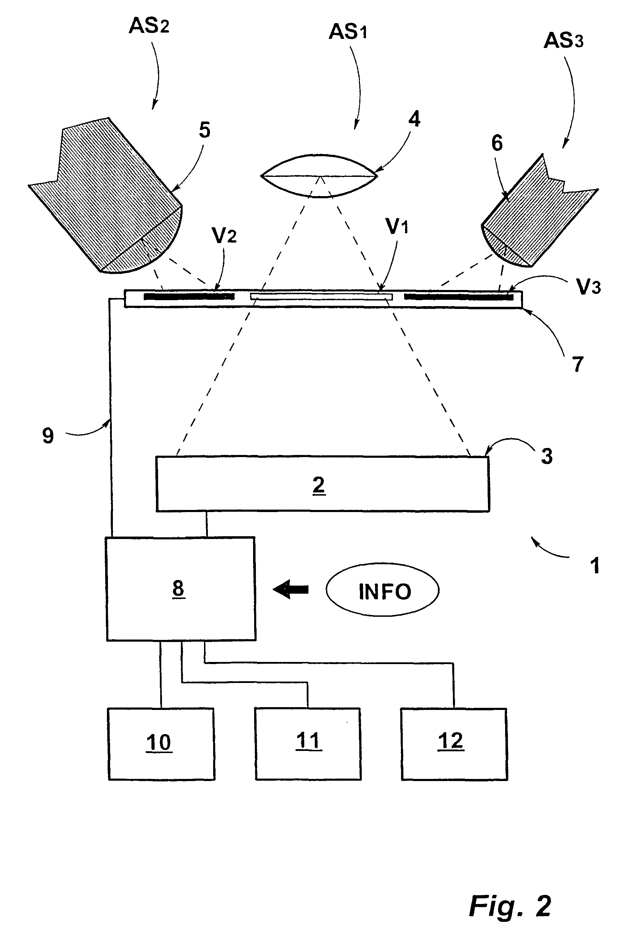

Figur 2 zeigt die Überwachungseinrichtung 1 der Figur 1 bei einer Belichtung der photosensitiven Oberfläche 3 des Kamerasensors 2 durch das Abbildungssystem AS₁. Das dem Abbildungssystem AS₁ zugeordnete Verschlußfeld V₁ der Verschlußeinheit 7 ist in seiner lichtdurchlassenden Ansteuerung. Die beiden weiteren Verschlußfelder V₂ und V₃ der Abbildungssysteme AS₂ und AS₃ befinden sich dagegen in ihrer lichtundurchlässigen Ansteuerung. Durch entsprechende Ansteuerung durch den Mikroprozessor 8 werden entweder zeitlich nach einem vorgegebenen Takt oder bei Bedarf die Verschlußfelder V₁ bzw. V₃ zum Lichtdurchlassen angesteuert und entsprechend die übrigen Verschlußfelder in die Lichtsperrstellung geschaltet.

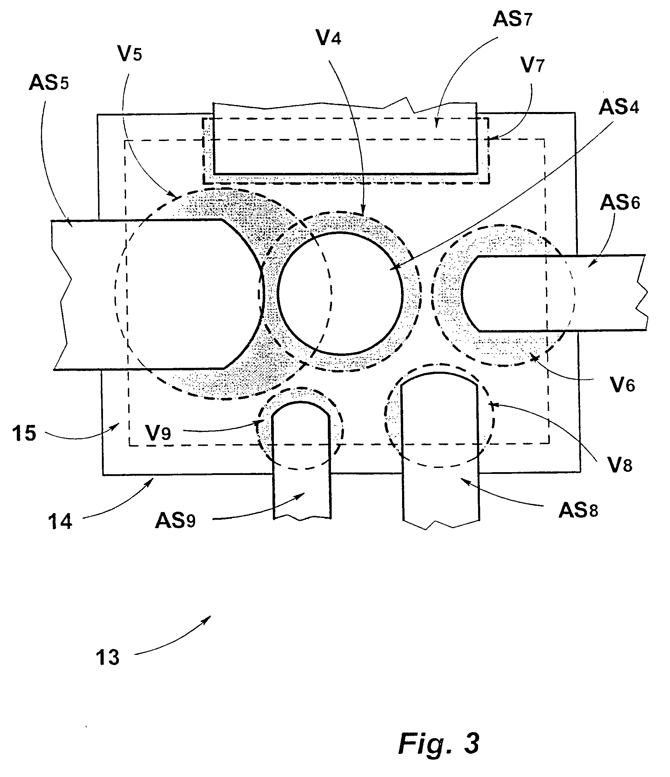

Schematisiert ist in Figur 3 nach Art einer Draufsicht eine weitere optoelektronische Überwachungseinrichtung 13 dargestellt. Die Überwachungseinrichtung 13 ist entsprechend aufgebaut wie die Überwachungseinrichtung 1, wobei im Unterschied zur Überwachungseinrichtung 1 der Figuren 1 und 2 diese Überwachungseinrichtung sechs Abbildungssysteme AS₄ - AS₉ umfaßt. Bei diesen Abbildungssystemen AS₄ - AS₉ handelt es sich um bildabbildende, wie beispielsweise die Abbildungssysteme AS₄ - AS₅ sowie AS₈ und um lichtleitende Systeme, wie etwa die Abbildungssysteme AS₇ und AS₉. Jedem Abbildungssystem ist in der Verschlußeinheit 14 ein Verschlußfeld V₄ - V₉ zugeordnet, welche Verschlußfelder V₄ - V₉ unabhängig voneinander angesteuert werden können. Hingewiesen sei insbesondere auf die Verschlußfelder V₄ und V₅, die sich bereichsweise überschneiden. Eine solche Überschneidung kann dann vorgesehen sein, wenn die diesen Verschlußfeldern V₄ und V₅ zugeordneten Abbildungssysteme AS₄ bzw. AS₅ nicht gleichzeitig auf der photosensitiven Oberfläche des Kamerasensors 15 abbilden sollen. Der gemeinsame Verschlußfeldbereich wird entsprechend einmal dem Verschlußfeld V₄ und zum anderen dem Verschlußfeld V₅ zugerechnet.

Zur Erhöhung der einer solchen Einrichtung zuzuführenden Abbildungssysteme, kann vorgesehen sein, daß die zum Kamerasensor weisende Oberfläche der Verschlußeinheit mit einer lichtreflektierenden Schicht beschichtet ist, beispielsweise bedampft ist, so daß Abbildungssysteme auf der photosensitiven Oberfläche des Kamerasensors abbilden können, deren optische Informationen an dieser beschichteten Unterseite der Verschlußeinheit reflektiert wird. Auch diesen zusätzlichen Abbildungssystemen ist eine eigene Verschlußeinheit zugeordnet. Die Bedampfung der Unterseite der Verschlußeinheit ist so vorgesehen, daß von oben durchtretendes Licht ungehindert durch die Beschichtung hindurch zu treten vermag.

In einer Erweiterung einer solchen Ausgestaltung ist die zur photosensitiven Oberfläche des Kamerasensors weisende Oberseite der Verschlußeinheit mit einer elektrochromen Schicht insgesamt oder auch segmentiert beschichtet, so daß durch entsprechende Ansteuerung der elektrochromen Segmente die reflektierenden Eigenschaften hervorgerufen werden können. Somit dient diese Schicht bzw. dienen diese Segmente sowohl zur Lichtlenkung als auch als Verschluß. Eine solche Verschlußeinheit ist zweckmäßigerweise mehrschichtig aufgebaut, wobei eine Verschlußeinheitebene für die Durchlichtstrahlengänge und die weitere Verschlußeinheitebene für die durch Reflexion zum Kamerasensor gelenkten optischen Informationen vorgesehen ist.

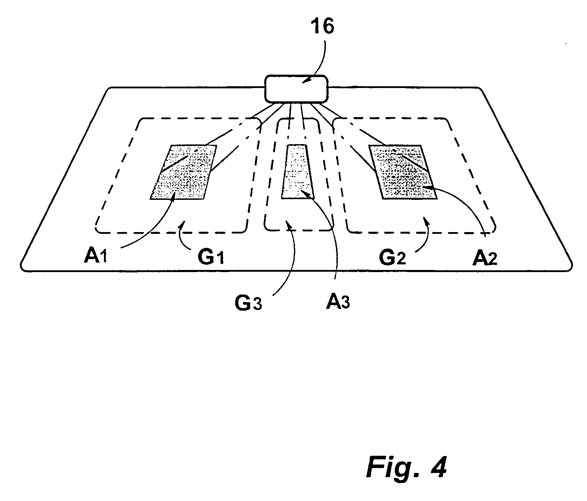

Figur 4 zeigt eine weitere Überwachungseinrichtung 16, die als Regensensor zum Betrachten von drei unterschiedlichen Windschutzscheibenausschnitten A_{1,} A₂ und A₃ angeordnet ist. Die betrachteten Windschutzscheibenausschnitte A₁ - A₃ sind Bestandteil unterschiedlicher Gesichtsfelder, wobei das primäre Fahrergesichtsfeld mit dem Bezugszeichen G₁, dasjenige des Beifahrers mit dem Bezugszeichen G₂ und das zwischen den beiden Gesichtsfeldern G₁ und G₂ liegende Sekundärgesichtsfeld mit dem Bezugszeichen G₃ gekennzeichnet sind. Die Detektionseinheit 17 umfaßt drei Objektive, von denen jeweils eines zum Betrachten eines Windschutzscheibenausschnittes A₁, A₂ oder A₃ angeordnet ist. Die Objektive bilden den jeweiligen Windschutzscheibenausschnitt A₁, A₂ bzw. A₃ auf der photosensitiven Oberfläche eines für alle Objektive gemeinsam vorgesehenen Kamerasensors ab. In den Strahlengang jedes abbildenden Objektives ist ein Lichtschalter angeordnet, so daß der Kamerasensor wahlweise von einem der drei Objektive belichtet werden kann. Als Lichtschalter ist eine in drei Teile segmentierte Flüssigkristallblende vorgesehen.

### Zusammenstellung der Bezugszeichen

- 1: Optoelektronische Überwachungseinrichtung
- 2: Kamerasensor
- 3: Photosensitive Oberfläche
- 4: Objektiv
- 5: Faserbündel
- 6: Faserbündel
- 7: Verschlußeinheit
- 8: Mikroprozessor
- 9: Steuerleitung
- 10: Aktor
- 11: Aktor
- 12: Aktor
- 13: Optoelektronische Überwachungseinrichtung
- 14: Verschlußeinheit
- 15: Kamerasensor
- 16: Optoelektronische Überwachungseinrichtung

- A₁ - A₃: Windschutzscheibenausschnitt
- AS₁ - AS₉: Abbildungssystem
- G₁ - G₃: Gesichtsfeld
- V₁ - V₉: Verschlußfeld

## Patentansprüche

1. Optoelektronische Überwachungseinrichtung für ein Kraftfahrzeug
- mit mehreren, unterschiedlichen Überwachungsobjekten zugeordneten optischen Abbildungssystemen (AS₁- AS₉), die ausgangsseitig die photosensitive Oberfläche (3) eines photoelektrischen Sensorarrays (2, 15), bestehend aus einer Vielzahl von einzelne Bildpunkte bildenden photoelektrischen Wandlerelementen beaufschlagen, welche Wandlerelemente in Abhängigkeit von ihrer jeweiligen Lichtbeaufschlagung ein der Lichtstärke entsprechendes elektrisches Signal generieren, wobei der Ausgang eines jeden Abbildungssystems (AS₁ - AS₉) zum Abbilden der von diesem Abbildungssystem (AS₁ - AS₉) bereitgestellten optischen Information auf einem Bereich der photosensitiven Oberfläche (3) des Sensorarrays (2, 15) angeordnet ist, der sich zumindest teilweise mit den Belichtungsbereichen der anderen Abbildungssysteme (AS₁- AS₉) überschneidet,
- mit einer in den Strahlengang eines jeden Abbildungssystems (AS₁-AS₉) angeordneten, unter Ausnutzung eines elektrooptischen Effekts elektrisch ansteuerbaren Verschlußeinheit (7, 14) zum Steuern einer Belichtung der photosensitiven Oberfläche (3) des Sensorarrays (2, 15) durch dieses Abbildungssystem (AS₁ - AS₉) und
- mit einem durch die elektrischen Ausgangssignale des Sensorarrays beaufschlagten Controller (8) zum Ansteuern der Verschlußeinheit (7, 14), zum Auswerten der optischen Informationen und zum Ansteuern von Aktoren (10, 11, 12) in Abhängigkeit von dem Ergebnis einer Auswertung der Objekt bezogenen Informationen.

2. Einrichtung nach Anspruch 1, **dadurch gekennzeichnet, daß** die einzelnen Wandlerelemente des Sensorarrays (2, 15) frei adressierbar und auslesbar sind.

3. Einrichtung nach Anspruch 1 oder 2, **dadurch gekennzeichnet, daß** die Wandlerelemente des Sensorarrays (2, 15) in einer zweidimensionalen Anordnung angeordnet sind.

4. Einrichtung nach Anspruch 1, 2 oder 3, **dadurch gekennzeichnet, daß** die Größe der photosensitiven Oberfläche des Sensorarrays durch die größte Abbildungsgröße eines Abbildungssystems bestimmt ist und alle weiteren Abbildungssysteme in diesem Bereich der photosensitiven Oberfläche des Sensorarrays abbilden.

5. Einrichtung nach einem der Ansprüche 1 bis 4, **dadurch gekennzeichnet, daß** die Verschlußeinheit (7, 14) als Flüssigkristallblende ausgebildet ist.

6. Einrichtung nach einem der Ansprüche 1 bis 4, **dadurch gekennzeichnet, daß** die Verschlußeinheit nach einem elektrochromen Prinzip arbeitend ausgebildet ist.

7. Einrichtung nach einem der Ansprüche 1 bis 6, **dadurch gekennzeichnet, daß** für die unterschiedlichen Abbildungssysteme eine Verschlußeinheit (7, 14) vorgesehen ist, die eine der Anzahl der Abbildungssysteme entsprechende Anzahl an Verschlußfeldern (V₁ - V₉) aufweist.

## Claims

1. Optoelectronic monitoring device for a motor vehicle
- with a plurality of optical imaging systems (AS₁ - AS₉) which are allocated to different monitoring objects and on their output side act on the photosensitive surface (3) of a photoelectric sensor array (2, 15) comprising a plurality of photoelectric converter elements forming individual pixels, the converter elements generating an electrical signal corresponding to the luminous intensity in dependence on their respective light admittance, for which the output of each imaging system (AS₁ - AS₉) is arranged in order to image the optical information provided by this imaging system (AS₁ - AS₉) on a section of the photosensitive surface (3) of the sensor array (2, 15) that intersects at least partially with the exposure areas of the other imaging systems (AS₁ - AS₉);
- with an electrically controllable shutter unit (7, 14) arranged in the beam path of each imaging system (AS₁- AS₉) making use of an electro-optical effect for the purpose of controlling an exposure of the photosensitive surface (3) of the sensor array (2, 15) by means of this imaging system (AS₁- AS₉), and
- with a controller (8) to which the electrical output signals of the sensor array are applied for the purpose of actuating the shutter unit (7, 14), for evaluating the optical information, and for triggering actuators (10, 11, 12) in dependence on the result of an evaluation of the object-related information.

2. Device in accordance with Claim 1, **characterised by** the fact that the individual converter elements of the sensor array (2, 15) can be freely addressed and read-out.

3. Device in accordance with Claim 1 or Claim 2, **characterised by** the fact that the converter elements of the sensor array (2, 15) are designed in a two-dimensional arrangement.

4. Device in accordance with any of Claims 1, 2 or 3, **characterised by** the fact that the size of the photosensitive surface of the sensor array is determined by the largest imaging size of an imaging system and all other imaging systems image in this section of the photosensitive surface of the sensor array.

5. Device in accordance with any of Claims 1 to 4, **characterised by** the fact that the shutter unit (7, 14) is designed as a liquid crystal aperture.

6. Device in accordance with any of Claims 1 to 4, **characterised by** the fact that the shutter unit is designed to function on an electro-chromic principle.

7. Device in accordance with any of Claims 1 to 6, **characterised by** the fact that a shutter unit (7, 14) is provided for the different imaging systems which features a number of shutter fields (V₁ - V₉) corresponding to the number of imaging systems.

## Revendications

1. Système de contrôle optoélectronique pour un véhicule automobile comprenant :
- plusieurs systèmes d'imagerie optiques (AS₁ - AS₉), associés à différents objets surveillés, qui activent, côté sortie, la surface photosensible (3) d'un réseau de détecteurs (2,15) consistant en un grand nombre d'éléments transducteurs photoélectriques formant différents points d'image, lesquels éléments transducteurs génèrent, en fonction de leur exposition à la lumière, un signal électrique correspondant à l'intensité lumineuse, la sortie de chaque système d'imagerie (AS₁ - AS₉) est agencée, pour la représentation d'informations optiques mises à disposition par ce système d'imagerie (AS₁ - AS₉), sur une zone de la surface photosensible (3) du réseau de détecteurs (2, 15), qui chevauche, au moins partiellement, les zones d'exposition des autres systèmes d'imagerie (AS₁ - AS₉),
- une unité d'obturation (7, 14) agencée dans la trajectoire des rayons de chaque système d'imagerie (AS₁- AS₉), laquelle peut être excité électriquement en exploitant un effet électro-optique, pour la commande d'une exposition de la surface photosensible (3) du réseau de détecteurs (2, 15) par ce système d'imagerie (AS₁ - AS₉), et
- un contrôleur (8) soumis à l'influence des signaux de sortie électriques du réseau détecteur pour l'excitation de l'unité d'obturation (7, 14) pour l'évaluation des informations optiques et pour l'excitation des actionneurs (10, 11, 12) en fonction du résultat d'une évaluation des informations se rapportant à l'objet.

2. Système selon la revendication 1, **caractérisé en ce que** les éléments transducteurs individuels du réseau détecteur (2, 15) peuvent être adressés et lus librement.

3. Système selon revendication 1 ou 2, **caractérisé en ce que** les éléments transducteurs du réseau de détecteurs (2, 15) sont agencés en disposition bidimensionnelle.

4. Système selon revendication 1, 2 ou 3, **caractérisé en ce que** la grandeur de la surface photosensible du réseaux de détecteurs est déterminée par la grandeur de représentation maximum d'un système d'imagerie et que tous les autres systèmes d'imagerie représentent dans cette zone de la surface photosensible du réseau de détecteurs.

5. Système selon l'une des revendications 1 à 4, **caractérisé en ce que** l'unité d'obturation (7, 14) est conçue en tant que diaphragme à cristaux liquides..

6. Système selon l'une des revendications 1 à 4, **caractérisé en ce que** l'unité d'obturation est conçue pour fonctionner selon un principe électrochrome.

7. Système selon l'une des revendications 1 à 6, **caractérisé en ce que**, pour les différents systèmes d'imagerie, est prévue une unité d'obturation (7, 14) qui présente un nombre de champs d'obturation (V₁ - V₉) correspondant au nombre des systèmes d'imagerie.
